# EUROPEAN PATENT SPECIFICATION

(11) **EP 3 547 425 B1**
(45) Date of publication and mention of the grant of the patent: **14.02.2024**
(21) Application number: 19166053.9
(22) Date of filing: 29.03.2019
(51) Int. Cl.: H01M 4/66, H01M 10/0525

(54) **LITHIUM ION BATTERY COMPRISING A CURRENT COLLECTOR WITH A MULTILAYER STRUCTURE**
LITHIUM-IONEN-BATTERIE MIT EINEM MEHRSCHICHTIGEN STROMABLEITER
BATTERIE LITHIUM-ION, COMPRENANT UN COLLECTEUR DE COURANT DE STRUCTURE MULTICOUCHE

(30) Priority: 30.03.2018 CN 201810288524
(43) Date of publication of application: 02.10.2019
(73) Proprietor: Contemporary Amperex Technology Co., Limited, Jiaocheng District Ningde City, Fujian 352100 (CN)
(72) Inventor: LIANG, Chengdu, Ningde City, Fujian 352100 (CN); HUANG, Huafeng, Ningde City, Fujian 352100 (CN); HUANG, Qisen, Ningde City, Fujian 352100 (CN); LIU, Xin, Ningde City, Fujian 352100 (CN)
(74) Representative: Ran, Handong

(56) References cited:
- JP-B2- 3 558 417
- US-A1- 2012 315 537

## Description

### TECHNICAL FIELD

The present application relates to the field of lithium-ion batteries and, specifically, relates to a current collector, an electrode plate, and an electrochemical device.

### BACKGROUND

Lithium ion batteries have been widely used in electric vehicles and consumer electronics due to their advantages such as high energy density, high output power, long cycle life, and low environmental pollution, etc. However, when the lithium ion batteries are subjected to abnormal conditions such as extrusion, collision, or puncture, they easily catch fire or explode, causing serious problems. Therefore, the safety issue of the lithium ion batteries greatly limits the application and popularization of the lithium ion batteries.

A large number of experimental results show that an internal short circuit in a battery is the ultimate cause of safety hazards of the lithium ion batteries. In order to avoid the internal short circuit in the battery, researchers tried to improve the separator structure, battery mechanical structure and so on. Some of these studies tried to improve the safety performance of the lithium ion batteries by modifying the design of current collectors.

In the related art, a current collector having a multilayer structure in which a metal layer is laminated on both sides of a resin layer is provided. Since the resin layer is not conductive, the resistance of the current collector is increased, thereby improving the safety of the battery. However, such composite current collector has poor conductivity. JP 3 558417 B2 and US 2012/315537 A1 disclose lithium ion batteries with current collectors comprising a multilayer structure and conductive material.

Therefore, it is necessary to provide a composite current collector having both high safety performance and good conductivity.

### SUMMARY

The present disclosure provides a lithium ion battery, including a positive electrode plate and a positive electrode active material layer. The positive electrode plate includes: a positive current collector, the positive current collector including a support layer, a conductive layer located on two opposite surfaces of the support layer, and a conductive material. The positive current collector is provided with a plurality of holes extending through the support layer and the conductive layer on the two opposite surfaces of the support layer, and the conductive material is filled in the plurality of holes. The positive electrode active material layer is formed on at least one surface of the positive current collector. The positive electrode active material layer includes a positive electrode active material NCM, the plurality of holes filled with the conductive material has a hole diameter of 5-35µm, and the positive electrode active material layer is not filled in the plurality of holes.

Optionally, the plurality of holes has a hole diameter of 0.001 mm to 3 mm; an area ratio of the plurality of holes to an entire surface of the conductive layer on one surface of the support layer is 0.01% to 10%; a spacing between the plurality of holes is 0.2 mm to 5 mm; and the plurality of holes has a shape of parallelogram, near-parallelogram, circle, near-circle, ellipse, or near-ellipse.

Optionally, the conductive material is at least one of a metal conductive material and a carbon-based conductive material. The metal conductive material is preferably at least one of aluminum, copper, nickel, titanium, silver, nickel-copper alloy, and aluminum-zirconium alloy, and the carbon-based conductive material is preferably at least one of graphite, acetylene black, graphene, and carbon nanotube.

Optionally, the conductive layer has a thickness of D2 satisfying: 30 nm ≤ D2 ≤ 3 µm, preferably 300 nm ≤ D2 ≤ 2 µm, and more preferably 500 nm ≤ D2 ≤ 1.5 µm.

Optionally, the support layer has a thickness of D1 satisfying: 1 µm ≤ D1 ≤ 20 µm, preferably 2 µm ≤ D1 ≤ 10 µm, and more preferably 2 µm ≤ D1 ≤ 6 µm.

Optionally, the support layer is made of a material selected from the group consisting of an insulation polymer material, an insulation polymer composite material, a conductive polymer material, and a conductive polymer composite material, and combinations thereof. The insulation polymer material is selected from the group consisting of polyamide, polyethylene terephthalate, polyimide, polyethylene, polypropylene, polystyrene, polyvinyl chloride, aramid fiber, polydiformylphenylenediamine, acrylonitrile-butadiene-styrene copolymer, polybutylene terephthalate, poly-p-phenylene terephthalamide, ethylene propylene rubber, polyformaldehyde, epoxy resin, phenolic resin, polytetrafluoroethylene, polyvinylidene fluoride, silicone rubber, polycarbonate, cellulose and derivatives thereof, starch and derivatives thereof, proteins and derivatives thereof, polyvinyl alcohol and crosslinked products thereof, polyethylene glycol and crosslinked products thereof, and combinations thereof. The insulation polymer composite material is a composite material formed by an insulation polymer material and an inorganic material. The inorganic material is preferably at least one of a ceramic material, a glass material, and a ceramic composite material. The conductive polymer material is at least one of a doped polysulfur nitride and a doped polyacetylene. The conductive polymer composite material is a composite material formed by an insulation polymer material and a conductive material. The conductive material is at least one of a conductive carbon material, a metal material, and a composite conductive material. The conductive carbon material is at least one of carbon black, carbon nanotube, graphite, acetylene black, and graphene, the metal material is at least one of nickel, iron, copper, aluminum, and alloys thereof, and the composite conductive material is at least one of a nickel-coated graphite powder and a nickel-coated carbon fiber.

Optionally, the conductive layer is made of the same material as the conductive material.

The technical solutions of the present disclosure have at least the following beneficial effects.

Compared with the conventional metal current collector, the support layer (preferably an insulation polymer material or an insulation polymer composite material) in the current collector according to the present disclosure has a relatively large electrical resistance, and thus the short circuit resistance of the battery when the short circuit occurs under abnormal conditions can be increased, so that the short circuit current can be greatly reduced, and thus heat generated by the short circuit can be greatly reduced, thereby improving the safety performance of the battery.

If only the conductive layer is arranged on two surfaces of the support layer, electrons are only conducted in a planar direction. However, in the current collector according to the present disclosure, electrons can be conducted not only through the conductive layer on the surfaces of the support layer but also through the conductive material, that is, a plurality of "parallel circuits" is added, so that a three-dimensional, multi-point conductive network can be formed in the current collector, thereby greatly improving the conductive performance of the composite current collector, reducing polarization of the electrode plate and the battery, and improving the electrochemical performances such as high-rate charge and discharge performance and cycle life of the battery.

In addition, the current collector is provided with a plurality of holes extending through the support layer and the conductive layer, which facilitates release of the stress of the conductive layer, thereby significantly improving the bonding force between the conductive layer and the support layer. The arrangement of the holes can also facilitate passage of the electrolyte, and improve the electrolyte wettability of the electrode plate based on the current collector, thereby reducing the polarization of the electrode plate and the battery, and improving the electrochemical performances such as high-rate charge and discharge performance and cycle life of the battery.

### BRIEF DESCRIPTION OF DRAWINGS

FIG. 1 is a top plan view of a positive electrode current collector according to an embodiment of the present disclosure;
FIG. 2 is a cross-sectional view of the positive electrode current collector shown in FIG. 1;
FIG. 3 is a three-dimensional cross-sectional view of the positive electrode current collector shown in FIG. 1;
FIG. 4 is a top plan view of a negative electrode current collector according to an embodiment of the present disclosure;
FIG. 5 is a sectional view of the negative electrode current collector shown in FIG. 4;
FIG. 6 is a three-dimensional cross-sectional view of the negative electrode current collector shown in FIG. 4;
FIG. 7 is a cross-sectional view of a positive electrode plate according to an embodiment of the present disclosure;
FIG. 8 is a cross-sectional view of a positive electrode plate according to another embodiment of the present disclosure;
FIG. 9 is a cross-sectional view of a negative electrode plate according to an embodiment of the present disclosure; and
FIG. 10 is a schematic diagram showing a nailing experiment of the present disclosure (holes are not shown);

### Reference signs:

1- positive electrode plate;
   10-positive electrode current collector;
      101- positive electrode support layer;
      102- positive electrode conductive layer;
      103- positive electrode conductive material;
   11- positive electrode active material layer;
   201- hole
2- negative electrode plate;
   20- negative electrode current collector;
      201- negative electrode support layer;
      202-negative electrode conductive layer;
      203- positive electrode conductive material;
   21- negative electrode active material layer;
   401- hole
3-separator;
4-nail.

### DESCRIPTION OF EMBODIMENTS

The present disclosure will be further described in combination with specific embodiments below. It should be understood that these embodiments are only for illustrating the present disclosure but not for limiting the scope of the appended claims.

The structure and performance of the current collector proposed in the first aspect the present disclosure will be described in detail below.

A current collector includes: a support layer, a conductive layer and a conductive material. The conductive layer is located on one or two surfaces of the support layer. A plurality of holes extending through the support layer and the conductive layer is arranged in the current collector, and is filled with a conductive material.

The conductive layer located on the one or two surfaces of the support layer is partially or entirely connected to the conductive material filled in the holes.

The support layer is configured to carry the conductive layer, and the conductive layer is configured to carry an electrode active material layer.

Compared with the conventional metal current collector, the support layer (preferably an insulation polymer material or an insulation polymer composite material) in the current collector according to the present disclosure has a relatively large electrical resistance, and thus a short circuit resistance of the battery when a short circuit occurs under abnormal conditions can be increased, so that a short circuit current can be greatly reduced, and thus heat generated by the short circuit can be greatly reduced, thereby improving the safety performance of the battery.

If only the conductive layer is arranged on the one or two surfaces of the support layer, electrons are only conducted in a planar direction. However, in the current collector according to the present disclosure, electrons can be conducted not only through the conductive layer on the surfaces of the support layer but also through the conductive material, that is, a plurality of "parallel circuits" is added, so that a three-dimensional, multi-point conductive network can be formed in the current collector, thereby greatly improving the conductive performance of the composite current collector, reducing polarization of the electrode plate and the battery, and improving the electrochemical performances such as high-rate charge and discharge performance and cycle life of the battery.

In addition, the current collector is provided with the plurality of holes extending through the support layer and the conductive layer, which facilitates release of the stress of the conductive layer, thereby significantly improving a bonding force between the conductive layer and the support layer. The arrangement of the holes can facilitate passage of the electrolyte, and improve electrolyte wettability of an electrode plate based on the current collector, thereby reducing the polarization of the electrode plate and the battery, and improving the electrochemical performances such as high-rate charge and discharge performance and cycle life of the battery.

These holes have a hole diameter in a range from 0.001 mm to 3 mm. In this range, it not only facilitates filling of the conductive material and has effects of improving safety, and improving polarization, etc., but also allows easy processing of the current collector, so that fracture rarely occurs during a processing process.

An area ratio of the plurality of holes to an entire surface of the conductive layer on one surface of the support layer is 0.01% to 10%. In this range, it not only facilitates filling of the conductive material and has the effects of improving safety, improving polarization, etc., but also allows easy processing of the current collector, so that fracture rarely occurs during a processing process.

A spacing between the holes is from 0.2 mm to 5 mm. The plurality of holes can be distributed with equal spacing or different spacing there between. Preferably, the plurality of holes is distributed with equal spacing there between.

The holes can have a shape of a parallelogram, a near-parallelogram, a circle, a near-circle, an ellipse, or a near-ellipse.

The holes filled with the conductive material have a hole diameter of 0 to 50 µm.

When the holes filled with the conductive material have a hole diameter of 0 µm, it means these holes are fully filled with the conductive material, and thus the conductivity of the current collector can be effectively improved.

If the holes filled with the conductive material have a hole diameter of greater than 0 µm and not greater than 50 µm, it means a smaller hole is reserved in the middle of each of these holes after these holes are filled with the conductive material, and a hole diameter of the reserved smaller hole is greater than 0 and not greater than 50 µm.

On the one hand, the smaller hole in the middle facilitates the stress release of the conductive layer, so that the bonding force between the conductive layer and the support layer is improved. On the other hand, passage of the electrolyte can be facilitated to improve the electrolyte wettability of the electrode plate based on the current collector, thereby reducing the polarization of the electrode plate and the battery, and improving the electrochemical performances such as high-rate charge and discharge performance and cycle life of the battery.

However, if the hole diameter of the holes filled with the conductive material is too large, it is easy to cause a phenomenon of "slurry leakage" during a processing process of the electrode plate. Therefore, the hole diameter of the holes filled with the conductive material is preferably not greater than 35 µm.

### (Support Layer)

In the current collector according to the embodiments of the present disclosure, the support layer mainly serves to support and protect the conductive layer, and the support layer has a thickness of D1 satisfying: 1 µm≤D1≤20 µm. In this range, a volumetric energy density of a battery using the current collector will not be reduced, and fracture rarely occurs during processes such as a processing process of the electrode plate.

An upper limit of the thickness of the support layer can be 20 µm, 15 µm, 12 µm, 10 µm, or 8 µm, and a lower limit of the thickness of the support layer can be 1 µm, 1.5 µm, 2 µm, 3 µm, 4 µm, 5 µm, 6 µm, or 7 µm. The thickness of the support layer can be in a range consisting of any upper limit and any lower limit. Preferably, 2 µm ≤ D1 ≤ 10 µm; and more preferably 2 µm ≤ D1 ≤ 6 µm.

The support layer is made of a material selected from the group consisting of an insulation polymer material, an insulation polymer composite material, a conductive polymer material, a conductive polymer composite material, and combinations thereof.

The insulation polymer material is selected from the group consisting of polyamide, polyethylene terephthalate (PET), polyimide (PI), polyethylene, polypropylene, polystyrene, polyvinyl chloride, aramid fiber, polydiformylphenylenediamine, acrylonitrile-butadiene-styrene copolymer, polybutylene terephthalate, poly-p-phenylene terephthalamide, ethylene propylene rubber, polyformaldehyde, epoxy resin, phenolic resin, polytetrafluoroethylene, polyvinylidene fluoride, silicone rubber, polycarbonate, cellulose and derivatives thereof, starch and derivatives thereof, proteins and derivatives thereof, polyvinyl alcohol and crosslinked products thereof, polyethylene glycol and crosslinked products thereof, and combinations thereof.

The insulation polymer composite material is a composite material formed by an insulation polymer material and an inorganic material, wherein the inorganic material is preferably at least one of a ceramic material (e.g., silicon oxide, silicon nitride, zirconium oxide, boron nitride, aluminum oxide), a glass material, and a ceramic composite material.

The conductive polymer material is at least one of a doped polysulfur nitride and a doped polyacetylene.

The conductive polymer composite material is a composite material formed by an insulation polymer material and a conductive material, wherein the conductive material is at least one of a conductive carbon material, a metal material, and a composite conductive material, wherein the conductive carbon material is at least one of carbon black, carbon nanotube, graphite, acetylene black, and graphene, the metal material is at least one of nickel, iron, copper, aluminum, and alloys thereof, and the composite conductive material is at least one of a nickel-coated graphite powder, and a nickel-coated carbon fiber.

Preferably, the support layer is made of an insulation polymer material or an insulation polymer composite material.

Therefore, a short circuit resistance of the battery when a short circuit occurs under abnormal conditions can be increased, so that a short circuit current can be greatly reduced, and thus heat generated by the short circuit can be greatly reduced, thereby improving the safety performance of the battery.

Preferably, the support layer is made of the organic polymer insulation material. Since the density of the support layer is generally smaller than that of metal, the battery using the current collector of the present disclosure can have an improved weight energy density as well as improved safety performance. Moreover, since the support layer can perfectly support and protect the conductive layer located on the surface thereof, the phenomenon of fracture of the electrode plate which is common in the conventional current collector will not easily occur.

### (Conductive Layer)

In the current collector according to the embodiments of the present disclosure, preferably, the conductive layer has a thickness of D2 satisfying: 30 nm ≤ D2 ≤ 3 µm.

The conductive layer is made of a material selected from the group consisting of a metal conductive material, a carbon-based conductive material, and combinations thereof. The metal conductive material is preferably at least one of aluminum, copper, nickel, titanium, silver, nickel copper alloy, and aluminum zirconium alloy. The carbon-based conductive material is preferably at least one of graphite, acetylene black, graphene, and carbon nanotube.

In an existing lithium ion battery, an aluminum foil or a copper foil is used as the current collector. When an internal short circuit occurs under abnormal conditions, a large current is instantaneously generated, and meanwhile a large amount of short circuit heat is generated. The heat usually causes a thermit reaction at the aluminum foil current collector of the positive electrode, which then causes the battery to catch fire, explode, and the like.

In the embodiments of the present disclosure, the above technical problem is solved by using the current collector having a conductive layer that has a specific thickness (30 nm ≤ D2 ≤ 3 µm) and supported by the support layer. Since the support layer has high resistance or is not conductive, and the conductive layer is much thinner than the conventional current collector (about 9 µm to 14 µm thick), then the current collector of the present disclosure has a relatively high electric resistance to increase the short circuit resistance of the battery when a short circuit occurs under abnormal conditions, thereby greatly reducing the short circuit current and the heat generated by the short circuit, and improving the safety performance of the battery.

An internal resistance of the battery usually includes an ohmic internal resistance of the battery and a polarization internal resistance of the battery. Factors such as an active material resistance, a current collector resistance, an interface resistance, an electrolyte composition, etc. may all have a significant influence on the internal resistance of the battery. When a short circuit occurs under abnormal conditions, the internal resistance of the battery will be greatly reduced due to the occurrence of an internal short circuit. Therefore, increasing the resistance of the current collector can increase the internal resistance of the battery after the short circuit occurs, thereby improving safety performance of the battery.

It is required that the thickness of the conductive layer be sufficient such that the conductive layer have functions of electric conduction and current collection. If the conductive layer is too thin, the effect of electric conduction and current collection is too poor, the polarization of the battery is large, and damage easily occurs during processing process of the electrode plate. If the conductive layer is too thick, it may affect the weight energy density of the battery, and may not be conductive to improving the safety performance of the battery.

In the embodiments of the present disclosure, an upper limit of the thickness D2 of the conductive layer can be 3 µm, 2.8 µm, 2.5 µm, 2.3 µm, 2 µm, 1.8 µm, 1.5 µm, 1.2 µm, 1 µm, or 900 nm, and an lower limit of the thickness D2 of the conductive layer can be 800 nm, 700 nm, 600 nm, 500 nm, 450 nm, 400 nm, 350 nm, 300 nm, 250 nm, 200 nm, 150 nm, 100 nm, 30 nm. The thickness D2 of the conductive layer can be in a range consisting of any upper limit and any lower limit. Preferably, 300 nm ≤ D2 ≤ 2 µm, and more preferably, 500 nm ≤ D2 ≤ 1.5 µm.

The conductive layer can be formed on the support layer by means of vapor deposition, electroless plating, or a combination thereof. The vapor deposition is preferably physical vapor deposition (PVD). Preferably, the physical vapor deposition is preferably evaporation, sputtering, or a combination thereof. The evaporation is preferably vacuum evaporation, thermal evaporation deposition, electron beam evaporation method (EBEM), or any combination thereof. The sputtering is preferably magnetron sputtering.

### (Conductive Material)

The conductive material is at least one of a metal conductive material and a carbon-based conductive material. The metal conductive material is preferably at least one of aluminum, copper, nickel, titanium, silver, nickel-copper alloy, and aluminum-zirconium alloy. The carbon-based conductive material is preferably at least one of graphite, acetylene black, graphene, and carbon nanotube.

Preferably, the material of the conductive layer is same as the conductive material.

Preferably, the material of the conductive layer is same as the conductive material, and it is achieved through one-time forming that the conductive layer is arranged on the surfaces of the support layer and the conductive material is filled in the holes. One-time forming is beneficial to simplify the processing process and improve the bonding force between the conductive layer and the conductive material. Meanwhile, the conductive layer firmly "grabs" the support layer from both the two surfaces of the support layer and the plurality of holes, and the bonding between the support layer and the conductive layer not only occurs to the planar direction, but also occurs at a depth direction, so that the bonding force between the conductive layer and the support layer is enhanced, thereby improving the long-term reliability and service life of the current collector.

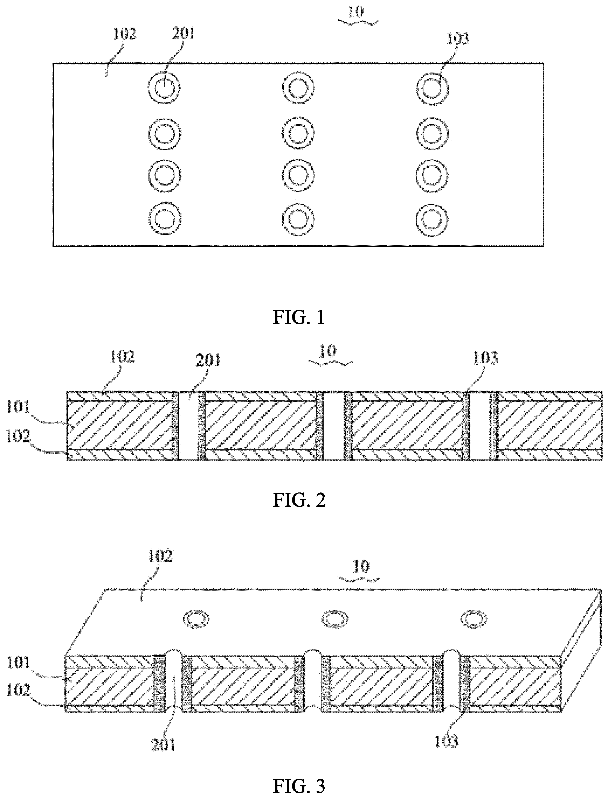

Specific structures of some current collectors of the embodiments of the present disclosure are exemplified below in conjunction with FIGs. 1 to 6.

Referring to FIGs. 1 to 3, a positive electrode current collector 10 includes a positive electrode support layer 101 and a positive electrode conductive layer 102 arranged on two surfaces of the positive electrode support layer 101. The positive electrode current collector 10 is provided with a plurality of holes 201 extending through the positive electrode support layer 101 and the positive electrode conductive layer 102. The plurality of holes 201 is filled with a conductive material 103, the plurality of hole 201 filled with the conductive material 103 has a hole diameter greater than zero, and the conductive layer 102 and the conductive material 103 are connected to each other.

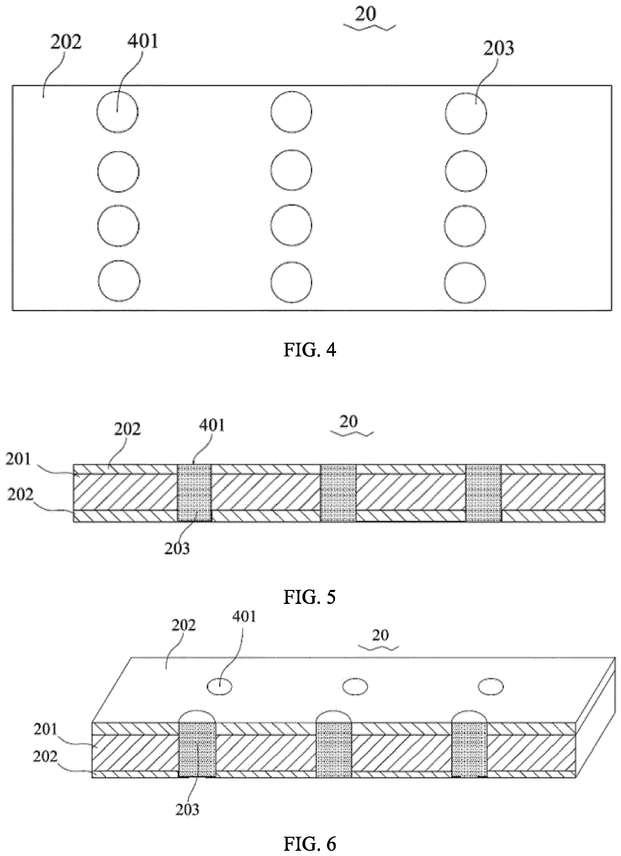

In FIGs. 4 to 6, a negative electrode current collector 20 includes a negative electrode support layer 201 and a negative electrode conductive layer 202 arranged on two surfaces of the negative electrode support layer 201. The negative electrode current collector 20 is provided with a plurality of holes 401 extending through the negative electrode support layer 201 and the negative electrode conductive layer 202. The plurality of holes 401 is fully filled with a conductive material 203, that is, the plurality of holes 401 filled with the conductive material 203 has a hole diameter of zero. The negative electrode conductive layer 202 and the conductive material 203 are connected to each other.

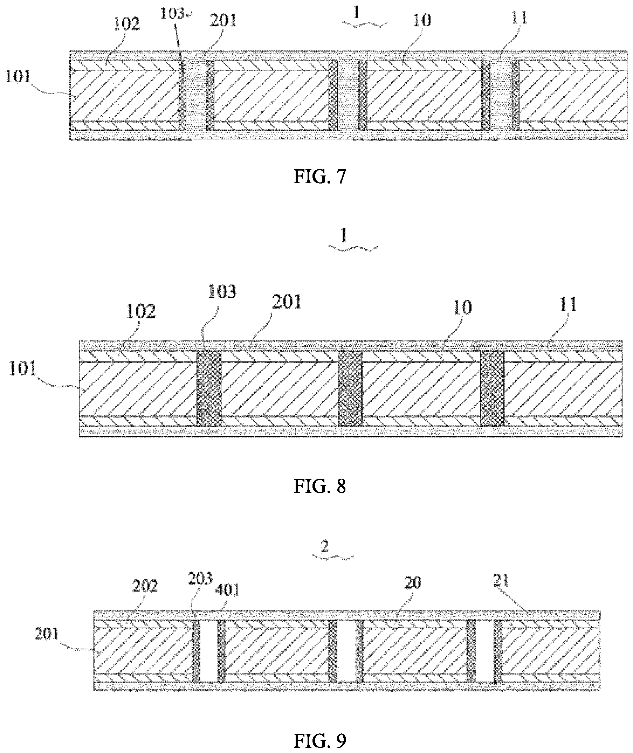

A second aspect of the present disclosure further provides an electrode plate including the current collector of the first aspect of the present disclosure and the electrode active material layer formed on the surface of the current collector. Specific structures of some electrode plates of the embodiments of the present disclosure are exemplified below with reference to FIGs. 7 to 9.

FIG. 7 is a schematic structural diagram showing a positive electrode plate according to an embodiment of the present disclosure. As shown in FIG. 7, the positive electrode plate 1 includes a positive electrode current collector 10 and a positive electrode active material layer 11 formed on a surface of the positive electrode current collector 10. The positive electrode current collector 10 includes the positive electrode support layer 101 and the positive electrode conductive layer 102 arranged on the two opposite surfaces of the positive electrode support layer 101. The positive electrode current collector 10 is provided with a plurality of holes 201 extending through the positive electrode support layer 101 and the positive electrode conductive layer 102. The plurality of holes 201 is filled with a conductive material 103, and the plurality of holes 201 filled with the conductive material 103 has a hole diameter greater than zero. The positive electrode conductive layer 102 and the conductive material 103 are bonded to each other. The positive electrode active material layer 11 is formed on the surfaces of the positive electrode current collector 10 and is also filled in the plurality of holes 201 filled with the conductive material 103.

FIG. 8 is a schematic structural diagram showing a positive electrode plate according to an embodiment of the present disclosure. As shown in FIG. 8, a positive electrode plate 1 includes a positive electrode current collector 10 and a positive electrode active material layer 11 formed on a surface of the positive electrode current collector 10. The positive electrode current collector 10 includes a positive electrode support layer 101 and a positive electrode conductive layer 102 arranged on two opposite surfaces of the positive electrode support layer 101. The positive electrode current collector 10 is provided with a plurality of holes 201 extending through the positive electrode support layer 101 and the positive electrode conductive layer 102. The plurality of holes 201 is filled with a conductive material 103, and the plurality of holes 201 filled with the conductive material 103 has a hole diameter of zero. The conductive layer 102 and the conductive material 103 are bonded to each other. The positive electrode active material layer 11 is formed on a surface of the positive electrode current collector 10.

FIG. 9 is a schematic structural diagram showing a negative electrode plate according to an embodiment of the present disclosure. As shown in FIG. 9, a negative electrode plate 2 includes a negative electrode current collector 20 and a negative electrode active material layer 21 formed on surfaces of the negative electrode current collector 20. The negative electrode current collector 20 includes a negative electrode support layer 201 and two negative electrode conductive layers 202 respectively arranged on two opposite surfaces of the negative electrode support layer 201. The negative electrode current collector 20 is provided with a plurality of holes 401 extending through the negative electrode support layer 201 and the two negative electrode conductive layers 202. The plurality of holes 401 is filled with a conductive material 203, and the plurality of holes 401 filled with the conductive material 203 has a hole diameter greater than zero. The negative electrode conductive layer 202 and the conductive material 203 are bonded to each other. The negative electrode active material layer 21 is formed on surfaces of the negative electrode current collector 20 and is not filled in the holes 401. In an actual circumstance, after the negative electrode active material layer 11 is coated or after the negative electrode active material layer 11 is dried and compacted, the negative electrode active material layer 11 may "invade" the holes from orifices thereof.

It should be noted that the above-mentioned FIGs. 1 to 9 are schematic diagrams, and the size, shape and distribution manner of the holes in the drawings are schematically shown.

The electrode plate according to the present disclosure includes the current collector of the present disclosure and an electrode active material layer formed on at least one surface of the current collector.

The electrode active material layer can be formed on at least one surface of the current collector and can be further filled in the holes filled with the conductive material.

When the holes filled with the conductive material have a hole diameter of zero, the electrode active material layer is formed on at least one surface of the current collector. In this circumstance, all of the holes are fully filled with the conductive material, and the conductivity of the current collector can be sufficiently and effectively improved.

Preferably, the holes filled with the conductive material have a hole diameter of greater than 0 and not greater than 35 µm, and the electrode active material layer is formed on at least one surface of the current collector. Meanwhile, the holes can facilitate passage of the electrolyte, and improve the electrolyte wettability of the electrode plate of the current collector, thereby reducing the polarization of the electrode plate and the battery, and improving the electrochemical performances such as high-rate charge and discharge performance and cycle life of the battery. Moreover, in the preparation process of the electrode plate, the phenomenon of "slurry leakage" will not occurs.

Alternatively, the holes filled with the conductive material have a hole diameter of greater than 0 and not greater than 50 µm, and an electrode active material layer is formed on at least one surface of the current collector and is further filled in the holes. The electrode active material layer portion formed on the at least one surface of the current collector is partially or entirely connected to the electrode active material layer portion filled in the plurality of holes of the current collector. In this case, the bonding force between the electrode active material layer and the current collector is stronger, the long-term reliability and service life of the electrode plate and the battery are better. The electrode active material layer itself also has pores, which can also facilitate the infiltration of the electrolyte, thereby reducing polarization of the battery. It is also conceivable that, if necessary, when the holes filled with the conductive material have a hole diameter of greater than 0 and not greater than 50 µm. the electrode active material layer is not further filled in the holes.

The present disclosure also provides an electrochemical device including a positive electrode plate, a separator, and a negative electrode plate. Specifically, the electrochemical device can be a wound type or laminated type battery, such as a lithium ion secondary battery.

Among them, the positive electrode plate is the electrode plate in the embodiments of the present disclosure.

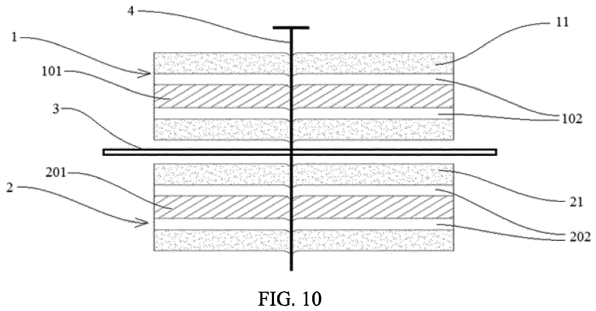

In the present disclosure, a nailing experiment is used to simulate the abnormal condition of the battery and observe changes of the battery after nailing. FIG. 10 is a schematic diagram of a nailing experiment of the present disclosure. For the sake of simplicity, the drawing merely shows that a nail 4 punctures through one layer of positive electrode plate 1, one layer of separator 3 and one layer of negative electrode plate 2 of the battery. It should be noted that the nail 4 penetrates through the entire battery in the actual nailing experiment. The entire battery generally includes a plurality of layers of positive electrode plates 1, a plurality of layers of separators 3, and a plurality of layers of negative electrode plates 2. When a short circuit occurs in the battery due to the nailing, the short circuit current is greatly reduced, and the heat generated during the short circuit is controlled within a range that can be fully absorbed by the battery. Therefore, the heat generated at the position where the internal short circuit occurs can be completely absorbed by the battery, and the caused temperature rise of the battery is also very small, such that the damage on the battery caused by the short circuit can be limited to the nailing position, and only a "point disconnection" can be formed without affecting the normal operation of the battery in a short time.

### Example

### 1. Preparation of current collector:

1.1 A support layer having a certain thickness was selected, holes were formed in the support layer, and then a conductive layer having a certain thickness was formed on the surface of the support layer by means of vacuum evaporation. During the vacuum evaporation, the conductive layer was also filled in the holes as a conductive material, that is, through one-time forming, the conductive layer was deposited on both the surface of the support layer and the wall surfaces of the holes.
1.2 A support layer having a certain thickness was selected, a conductive layer having a certain thickness was formed on its surface by vacuum evaporation, and then holes were formed, and then the holes were filled with a conductive material.

The conditions of the vacuum evaporation for forming the conductive layer are as follows: the support layer having its surface cleaned is placed in a vacuum evaporation chamber, a high-purity metal wire in a metal evaporation chamber is melted and evaporated at a high temperature in a range of 1600 °C to 2000 °C, the evaporated metal passes through a cooling system in the vacuum evaporation chamber and is finally deposited on the surface of the support layer to form the conductive layer.

### 2. Preparation of electrode plate:

A positive electrode slurry or a negative electrode slurry was coated on a surface of the current collector by a conventional coating process of battery and dried at 100 °C, so as to obtain a positive electrode plate or negative electrode plate.

Conventional positive electrode plate: The current collector is an Al foil having a thickness of 12 µm, and the electrode active material layer is a ternary (NCM) material layer having a certain thickness.

Conventional negative electrode plate: The current collector is a Cu foil having a thickness of 8 µm, and the electrode active material layer is a graphite material layer having a certain thickness.

In some embodiments, the electrode active material layer is only arranged on a planar portion of the current collector. In some other embodiments, the electrode active material layer is arranged on the planar portion of the current collector and in the holes.

The specific parameters of the prepared current collectors and electrode plates using the current collectors are shown in Table 1. The parameters of the support layers, the conductive layers and the electrode active materials of the current collectors of the electrode plates 1 to 8 are also shown in Table 1. In these current collectors, the conductive layer is arranged on both an upper surface and a lower surface of the support layer by vacuum evaporation; the conductive layer on the two surfaces of the support layer is connected to all of the conductive material filled in the holes. When the material of the conductive layer is same as the conductive material, it is achieved through one-time forming that the conductive layer is formed and the conductive material is filled in the holes. The shape of the holes is a parallelogram, a near-parallelogram, a circle, a near-circle, an ellipse, or a near-ellipse. The hole diameter of each hole is selected to be 0.01 mm, and the area ratio of these holes is selected to be 0.1%. The spacing between these holes is selected to be 0.3mm.

### 3. Preparation of the battery:

A positive electrode plate (compact density: 3.4 g/cm³ ), a PP/PE/PP separator and a negative electrode plate (compact density: 1.6 g/cm³ ) were wound together to form a bare cell by a conventional battery manufacturing process, then the bare cell is placed into a battery case, an electrolyte (EC:EMC= 3:7 v/v, LiPF6 : 1 mol/L) was injected into the case, and then sealing, formation, etc. were followed, so as to obtain a lithium ion battery.

Specific compositions of the lithium ion batteries prepared in the embodiments of the present disclosure and the batteries of the comparative examples are shown in Table 2.

**Table 1**

| Electrode plate No. | Insulation layer | | Conductive layer | | Conductive material | Hole diameter after the conductive material is filled | Electrode active material layer | | |
|---|---|---|---|---|---|---|---|---|---|
| | Material | D1 | Material | D2 | | | Material | Filled/not filled | Thickness |
| Electrode plate 1 | PI | 6µm | Al | 2µm | / | / | NCM | / | 55µm |
| Electrode plate 2 | PET | 1µm | Al | 30nm | Ni | 0 | LCO | / | 55µm |
| Electrode plate 3 | PI | 2µm | Al | 300nm | Al | 0 | NCM | / | 55µm |
| Electrode plate 4 | PET | 10µm | Al | 500nm | Al | 5µm | NCM | Not filled | 55µm |
| Electrode plate 5 | PET | 8µm | Ni | 800nm | Ni | 15µm | NCM | Not filled | 55µm |
| Electrode plate 6 | PI | 20µm | Al | 2µm | Al | 35µm | NCM | Not filled | 55µm |
| Electrode plate 7 | PET | 6µm | Al | 2.5µm | Al | 50µm | NCM | Filled | 55µm |

**Table 2**

| Battery No. | Composition of the electrode plate | |
|---|---|---|
| Battery 1 | Conventional positive electrode plate | Conventional negative electrode plate |
| Battery 2 | Electrode plate 1 | Conventional negative electrode plate |
| Battery 3 | Electrode plate 2 | Conventional negative electrode plate |
| Battery 4 | Electrode plate 3 | Conventional negative electrode plate |
| Battery 5 | Electrode plate 4 | Conventional negative electrode plate |
| Battery 6 | Electrode plate 5 | Conventional negative electrode plate |
| Battery 7 | Electrode plate 6 | Conventional negative electrode plate |
| Battery 8 | Electrode plate 7 | Conventional negative electrode plate |

### Test examples:

### 1. Test method of the batteries:

Cycle life of the lithium ion battery was tested by a method as follows:

A lithium ion battery was charged and discharged at 25 °C and 45 °C, respectively, that is, it was firstly charged with a current of 1C to a voltage of 4.2V, then discharged with a current of 1C to a voltage of 2.8V, and the discharge capacitance after this first cycle was recorded; and the battery was subjected to 1000 cycles of 1C/1C charging-discharging, and the discharge capacitance of the battery after a 1000^{th} cycle was recorded. A capacitance retention rate after the 1000^{th} cycle was obtained by dividing the discharge capacitance after the 1000^{th} cycle by the discharge capacitance after the first cycle.

The test results are shown in Table 3.

### 2. Test methods of nailing experiment:

Nailing experiment: a battery that had been fully charged was fixed, a steel needle with a diameter of 8 mm punctured through the battery at a speed of 25 mm/s at room temperature and remained in the battery, and the battery was observed and measured after the nailing was finished.

Measurement of battery temperature: a multichannel thermometer was used, and the temperature-sensing wires were respectively attached on geometric centers of a nail-inserting surface and an opposite surface of the battery to be nailed; after the nailing was finished, temperature of the battery was measured and tracked for 5 minutes, and the temperature of the battery at the end of the 5 minutes was recorded.

Measurement of battery voltage: positive and negative electrodes of each battery to be nailed were connected to test terminals of an internal resistance instrument; after the nailing was finished, a voltage of each battery was measured and tracked for 5 minutes, and the voltage of the battery at the end of 5 minutes was recorded.

The data of the recorded battery temperatures and voltages are shown in Table 4.

### 3. Test method for bonding force between conductive layer and insulation layer

The electrode plate was immersed in a mixed solvent of dimethyl carbonate and hydrofluoric acid (the content of the hydrofluoric acid is 0.1 wt%), vacuum-sealed, and stored in a 70 °C incubator for several days. When the storage was finished, the electrode plate was taken out and folded in half along its length direction, and a 2 Kg weight was placed on the folded position to compact the folded electrode palte for 10 seconds. After the compaction was finished, the electrode plate was flattened to observe if the conductive layer peeled off at the crease, and the number of days the electrode plate had been storage by the time when peeling off occurred was recorded. The test results are shown in Table 5.

**Table 3**

| Battery No. | Capacitance retention rate after the 1000^{th} cycle | |
|---|---|---|
| | 25 °C | 45 °C |
| Battery 1 | 82.3% | 80.2% |
| Battery 2 | 83.5% | 81.1% |
| Battery 3 | 84.6% | 82.2% |
| Battery 4 | 86.7% | 83.5% |
| Battery 5 | 87.9% | 84.1% |
| Battery 6 | 88.2% | 85.2% |
| Battery 7 | 89.1% | 85.7% |
| Battery 8 | 89.3% | 85.9% |

**Table 4**

| Battery No. | Nailing experiment | |
|---|---|---|
| | Battery temperature rise (°C) | Battery voltage (V) |
| Battery 1 | N/A | N/A |
| Battery 2 | 17.2 | 3.85 |
| Battery 3 | 5.3 | 3.83 |
| Battery 4 | 4.9 | 3.95 |
| Battery 5 | 4.5 | 4.11 |
| Battery 6 | 4.1 | 4.15 |
| Battery 7 | 16.3 | 3.86 |
| Battery 8 | 18.2 | 3.79 |

| | | |
|---|---|---|
| Note: "N/A" indicates that thermal runaway and damage happened immediately after the steel needle punctured through the battery. | | |

**Table 5**

| Electrode plate No. | Number of days |
|---|---|
| Electrode plate 1 | 10 |
| Electrode plate 2 | 20 |
| Electrode plate 3 | 22 |
| Electrode plate 4 | 24 |
| Electrode plate 5 | 27 |
| Electrode plate 6 | 34 |
| Electrode plate 7 | 63 |

According to the results in Table 3, compared with the battery using the conventional positive electrode plate and the conventional negative electrode plate, the batteries using the current collectors according to the embodiments of the present disclosure have good cycle life, which is comparable to the cycle life of the conventional battery. This shows that the current collectors according to the embodiments of the present disclosure do not have any significant adverse effect on the electrode plates and batteries using them.

According to the results in Table 4, in the battery 1 without using the current collector according to the embodiments of the present disclosure, i.e., in the battery 1 using the conventional positive electrode plate and the conventional negative electrode plate, the temperature of the battery at the moment of nailing rose suddenly by hundreds of centigrade degree and the voltage thereof suddenly dropped to zero. This shows that the internal short circuit occurred in the battery at the moment of nailing, a large amount of heat was generated, and a thermal runaway and damage of the battery instantly occurred, such that the battery was unable to continue working.

The composite current collector according to the present disclosure can greatly improve the safety performance of the battery, compared with a battery composed of a conventional positive electrode plate and a conventional negative electrode plate. In addition, the perforated composite current collector is advantageous for improving the safety performance, compared with an un-perforated composite current collector.

According to the results in Table 5, compared with the un-perforated composite current collector, the bonding force between the conductive layer and the support layer of the composite current collector having holes was significantly enhanced. When the material of the conductive layer is same as the conductive material, it was achieved through one-time forming that the conductive layer is formed and the conductive material is deposited in the holes, and the bonding force between the conductive layer and the conductive material is stronger, so that the conductive layer firmly "grabs" the support layer from at least one surface of the support layer and the plurality of holes, and the bonding between the support layer and the conductive layer not only occurs in the planar direction, but also occurs at the depth direction, thereby enhancing the bonding force between the conductive layer and the support layer, and improving the long-term reliability and service life of the current collector.

Some embodiments of the present disclosure are disclosed above but are not used to limit the claims. Those skilled in the art may make possible changes and modifications without departing from the concept of the present disclosure. Therefore, the protection scope of the present disclosure is defined by the attached claims.

## Claims

1. A lithium ion battery, comprising a positive electrode plate, wherein the positive electrode plate comprises:
a positive current collector, the positive current collector comprising a support layer, a conductive layer located on two opposite surfaces of the support layer, and a conductive material, wherein the positive current collector is provided with a plurality of holes extending through the support layer and the conductive layer on the two opposite surfaces of the support layer, and the conductive material is filled in the plurality of holes; and
a positive electrode active material layer formed on at least one surface of the positive current collector,
**characterized in that** the positive electrode active material layer comprises a positive electrode active material NCM, the plurality of holes filled with the conductive material has a hole diameter of 5-35µm, and the positive electrode active material layer is not filled in the plurality of holes.

2. The lithium ion battery according to claim 1, **characterized in that** the plurality of holes has a hole diameter of 0.001 mm to 3 mm;
an area ratio of the plurality of holes to an entire surface of the conductive layer on one surface of the support layer is 0.01% to 10%;
a spacing between the plurality of holes is 0.2 mm to 5 mm; and
the plurality of holes has a shape of parallelogram, near-parallelogram, circle, near-circle, ellipse, or near-ellipse.

3. The lithium ion battery according to claim 1, **characterized in that** the conductive material is at least one of a metal conductive material and a carbon-based conductive material, wherein the metal conductive material is preferably at least one of aluminum, copper, nickel, titanium, silver, nickel-copper alloy, and aluminum-zirconium alloy, and the carbon-based conductive material is preferably at least one of graphite, acetylene black, graphene, and carbon nanotube.

4. The lithium ion battery according to claim 1, **characterized in that** the conductive layer has a thickness of D2 satisfying: 30 nm ≤ D2 ≤ 3 µm, preferably 300 nm ≤ D2 ≤ 2 µm, and more preferably 500 nm ≤ D2 ≤ 1.5 µm.

5. The lithium ion battery according to claim 2, **characterized in that** the support layer has a thickness of D1 satisfying: 1 µm ≤ D1 ≤ 20 µm, preferably 2 µm ≤ D1 ≤ 10 µm, and more preferably 2 µm ≤ D1 ≤ 6 µm.

6. The lithium ion battery according to claim 1, **characterized in that** the support layer is made of a material selected from the group consisting of an insulation polymer material, an insulation polymer composite material, a conductive polymer material, and a conductive polymer composite material, and combinations thereof, wherein
the insulation polymer material is selected from the group consisting of polyamide, polyethylene terephthalate, polyimide, polyethylene, polypropylene, polystyrene, polyvinyl chloride, aramid fiber, polydiformylphenylenediamine, acrylonitrile-butadiene-styrene copolymer, polybutylene terephthalate, poly-p-phenylene terephthalamide, ethylene propylene rubber, polyformaldehyde, epoxy resin, phenolic resin, polytetrafluoroethylene, polyvinylidene fluoride, silicone rubber, polycarbonate, cellulose and derivatives thereof, starch and derivatives thereof, proteins and derivatives thereof, polyvinyl alcohol and crosslinked products thereof, polyethylene glycol and crosslinked products thereof, and combinations thereof;
the insulation polymer composite material is a composite material formed by an insulation polymer material and an inorganic material, wherein the inorganic material is preferably at least one of a ceramic material, a glass material, and a ceramic composite material;
the conductive polymer material is at least one of a doped polysulfur nitride and a doped polyacetylene; and
the conductive polymer composite material is a composite material formed by an insulation polymer material and a conductive material, wherein the conductive material is at least one of a conductive carbon material, a metal material, and a composite conductive material, wherein the conductive carbon material is at least one of carbon black, carbon nanotube, graphite, acetylene black, and graphene, the metal material is at least one of nickel, iron, copper, aluminum, and alloys thereof, and the composite conductive material is at least one of a nickel-coated graphite powder and a nickel-coated carbon fiber.

7. The lithium ion battery according to claim 3, **characterized in that** the conductive layer is made of the same material as the conductive material.

## Patentansprüche

1. Lithium-Ionen-Batterie, die eine positive Elektrodenplatte umfasst, wobei die positive Elektrodenplatte Folgendes umfasst:
einen positiven Stromabnehmer, wobei der positive Stromabnehmer eine Trägerschicht, eine leitende Schicht, die sich auf zwei gegenüberliegenden Oberflächen der Trägerschicht befindet, und ein leitendes Material umfasst, wobei der positive Stromabnehmer mit einer Vielzahl von Löchern bereitgestellt ist, die sich durch die Trägerschicht und die leitende Schicht auf den zwei gegenüberliegenden Oberflächen der Trägerschicht erstrecken, und das leitende Material in die Vielzahl von Löchern gefüllt ist; und
eine Schicht von aktivem positivem Elektrodenmaterial, die auf mindestens einer Oberfläche des positiven Stromabnehmers ausgebildet ist,
**dadurch gekennzeichnet, dass** die Schicht von aktivem positivem Elektrodenmaterial ein aktives positives Elektrodenmaterial NCM umfasst, die Vielzahl von Löchern, die mit dem leitenden Material gefüllt ist, einen Lochdurchmesser von 5-35 µm aufweist und die Schicht von aktivem positivem Elektrodenmaterial nicht in die Vielzahl von Löchern gefüllt ist.

2. Lithium-Ionen-Batterie nach Anspruch 1, **dadurch gekennzeichnet, dass** die Vielzahl von Löchern einen Lochdurchmesser von 0,001 mm bis 3 mm aufweist;
ein Flächenverhältnis der Vielzahl von Löchern zu einer gesamten Oberfläche der leitenden Schicht auf einer Oberfläche der Trägerschicht 0,01 % bis 10 % beträgt;
ein Abstand zwischen der Vielzahl von Löchern 0,2 mm bis 5 mm beträgt; und die Vielzahl von Löchern eine Form eines Parallelogramms, nahezu Parallelogramms, Kreises, nahezu Kreises, einer Ellipse oder nahezu Ellipse aufweist.

3. Lithium-Ionen-Batterie nach Anspruch 1, **dadurch gekennzeichnet, dass** das leitende Material mindestens eines eines leitenden Metallmaterials und eines leitenden kohlenstoffbasierten Materials ist, wobei das leitende Metallmaterial bevorzugt mindestens eines von Folgenden ist: Aluminium, Kupfer, Nickel, Titan, Silber, Nickel-Kupfer-Legierung und Aluminium-Zirconium-Legierung, und das leitende kohlenstoffbasierte Material bevorzugt mindestens eines von Folgenden ist: Graphit, Acetylen-Schwarz, Graphen und Kohlenstoff-Nanoröhre.

4. Lithium-Ionen-Batterie nach Anspruch 1, **dadurch gekennzeichnet, dass** die leitende Schicht eine Dicke von D2 aufweist, die Folgende erfüllt: 30 nm ≤ D2 ≤ 3 µm, bevorzugt 300 nm ≤ D2 ≤ 2 µm und bevorzugter 500 nm ≤ D2 ≤ 1,5 µm.

5. Lithium-Ionen-Batterie nach Anspruch 2, **dadurch gekennzeichnet, dass** die Trägerschicht eine Dicke von D1 aufweist, die Folgende erfüllt: 1 µm ≤ D1 ≤ 20 µm, bevorzugt 2 µm ≤ D1 ≤ 10 µm und bevorzugter 2 µm ≤ D1 ≤ 6 µm.

6. Lithium-Ionen-Batterie nach Anspruch 1, **dadurch gekennzeichnet, dass** die Trägerschicht aus einem Material hergestellt ist, das aus der Gruppe ausgewählt ist, die aus Folgendes besteht: einem Isolierpolymermaterial, einem Isolierpolymerverbundmaterial, einem leitenden Polymermaterial und einem leitenden Polymerverbundmaterial, und Kombinationen davon, wobei
das Isolierpolymermaterial aus der Gruppe ausgewählt ist, die aus Folgenden besteht: Polyamid, Polyethylenterephthalat, Polyimid, Polyethylen, Polypropylen, Polystyrol, Polyvinylchlorid, Aramidfaser, Polydiformylphenylendiamin, AcrylnitrilButadien-Styrol-Copolymer, Polybutylenterephthalat, Poly-p-phenylenterephthalamid, Ethylen-Propylen-Kautschuk, Polyformaldehyd, Epoxidharz, Phenolharz, Polytetrafluorethylen, Polyvinylidenfluorid, Silikon-Kautschuk, Polycarbonat, Cellulose und Derivaten davon, Stärke und Derivaten davon, Proteinen und Derivaten davon, Polyvinylalkohol und vernetzten Produkten davon, Polyethylenglycol und vernetzten Produkten davon, und Kombinationen davon;
das Isolierpolymerverbundmaterial ein Verbundmaterial ist, das aus einem Isolierpolymermaterial und einem anorganischen Material gebildet ist, wobei das anorganische Material bevorzugt mindestens eines eines keramischen Materials, eines Glasmaterials und eines keramischen Verbundmaterials ist;
das leitende Polymermaterial mindestens eines eines dotierten Polyschwefelnitrids und eines dotierten Polyacetylens ist; und
das leitende Polymerverbundmaterial ein Verbundmaterial ist, das aus einem Isolierpolymermaterial und einem leitenden Material gebildet ist, wobei das leitende Material mindestens eines eines leitenden Kohlenstoffmaterials, eines Metallmaterials und eines leitenden Verbundmaterials ist, wobei das leitende Kohlenstoffmaterial mindestens eines von Ruß, Kohlenstoff-Nanoröhre, Graphit, Acetylen-Schwarz und Graphen ist, das Metallmaterial mindestens eines von Nickel, Eisen, Kupfer, Aluminium und Legierungen davon ist und das leitende Verbundmaterial mindestens eines eines Nickel-beschichteten Graphitpulvers und einer Nickel-beschichteten Kohlenstofffaser ist.

7. Lithium-Ionen-Batterie nach Anspruch 3, **dadurch gekennzeichnet, dass** die leitende Schicht aus dem gleichen Material hergestellt ist wie das leitende Material.

## Revendications

1. Batterie lithium-ion, comprenant une plaque d'électrode positive, dans laquelle la plaque d'électrode positive comprend :
un collecteur de courant positif, le collecteur de courant positif comprenant une couche support, une couche conductrice située sur deux surfaces opposées de la couche support, et un matériau conducteur, le collecteur de courant positif étant pourvu d'une pluralité de trous s'étendant à travers la couche support et la couche conductrice sur les deux surfaces opposées de la couche support, et le matériau conducteur étant rempli dans la pluralité de trous ; et
une couche de matériau actif d'électrode positive formée sur au moins une surface du collecteur de courant positif,
**caractérisée en ce que** la couche de matériau actif d'électrode positive comprend un matériau actif d'électrode positive NCM, la pluralité de trous remplis du matériau conducteur présentent un diamètre de trou de 5 à 35 µm, et la couche de matériau actif d'électrode positive n'est pas remplie dans la pluralité de trous.

2. Batterie lithium-ion selon la revendication 1, **caractérisée en ce que** la pluralité de trous présente un diamètre de trou de 0,001 mm à 3 mm ;
un rapport de la surface de la pluralité de trous à une surface totale de la couche conductrice sur une surface de la couche support est de 0,01 % à 10 % ;
un espacement entre la pluralité de trous est de 0,2 mm à 5 mm ; et
la pluralité de trous a une forme de parallélogramme, quasi-parallélogramme, cercle, quasi-cercle, ellipse ou quasi-ellipse.

3. Batterie lithium-ion selon la revendication 1, **caractérisée en ce que** le matériau conducteur est au moins l'un d'un matériau conducteur métallique et d'un matériau conducteur à base de carbone, le matériau conducteur métallique est de préférence au moins l'un de l'aluminium, du cuivre, du nickel, du titane, de l'argent, d'un alliage nickel-cuivre et d'un alliage aluminium-zirconium, et le matériau conducteur à base de carbone est de préférence au moins l'un du graphite, du noir d'acétylène, du graphène et d'un nanotube de carbone.

4. Batterie lithium-ion selon la revendication 1, **caractérisée en ce que** la couche conductrice présente une épaisseur de D2 satisfaisant : 30 nm ≤ D2 ≤ 3 µm, de préférence 300 nm ≤ D2 ≤ 2 µm et de manière davantage préférée 500 nm ≤ D2 ≤ 1,5 µm.

5. Batterie lithium-ion selon la revendication 2, **caractérisée en ce que** la couche support présente une épaisseur de D1 satisfaisant : 1 µm ≤ D1 ≤ 20 µm, de préférence 2 µm ≤ D1 ≤ 10 µm et de manière davantage préférée 2 µm ≤ D1 ≤ 6 µm.

6. Batterie lithium-ion selon la revendication 1, **caractérisée en ce que** la couche support est constituée d'un matériau sélectionné parmi le groupe consistant en un matériau polymère isolant, un matériau composite polymère isolant, un matériau polymère conducteur et un matériau composite polymère conducteur, et leurs combinaisons ; dans laquelle
le matériau polymère isolant est sélectionné parmi le groupe consistant en un polyamide, un polytéréphtalate d'éthylène, un polyimide, un polyéthylène, un polypropylène, un polystyrène, un polychlorure de vinyle, une fibre aramide, une polydiformylphénylènediamine, un copolymère acrylonitrile-butadiène-styrène, un polytéréphtalate de butylène, un poly-p-phénylène téréphtalamide, un caoutchouc éthylène propylène, un polyformaldéhyde, une résine époxy, une résine phénolique, un polytétrafluoroéthylène, un polyfluorure de vinylidène, un caoutchouc silicone, un polycarbonate, une cellulose et ses dérivés, un amidon et ses dérivés, des protéines et leurs dérivés, un alcool polyvinylique et ses produits de réticulation, un polyéthylène glycol et ses produits de réticulation et des combinaisons de ceux-ci ;
le matériau composite polymère isolant est un matériau composite formé d'un matériau polymère isolant et d'un matériau inorganique, le matériau inorganique étant de préférence au moins l'un d'un matériau céramique, d'un matériau de type verre et d'un matériau composite céramique ;
le matériau polymère conducteur est au moins l'un d'un poly nitrure de soufre dopé et d'un polyacétylène dopé ; et
le matériau composite polymère conducteur est un matériau composite formé d'un matériau polymère isolant et d'un matériau conducteur, le matériau conducteur étant au moins l'un d'un matériau carboné conducteur, d'un matériau métallique, et d'un matériau conducteur composite, le matériau carboné conducteur étant au moins l'un du noir de carbone, d'un nanotube de carbone, du graphite, du noir d'acétylène et du graphène, le matériau métallique étant au moins l'un du nickel, du fer, du cuivre, de l'aluminium et d'alliages de ceux-ci, et le matériau conducteur composite est au moins l'un d'une poudre de graphite revêtu de nickel et d'une fibre de carbone revêtue de nickel.

7. Batterie lithium-ion selon la revendication 3, **caractérisée en ce que** la couche conductrice est constituée du même matériau que le matériau conducteur.
